# EUROPÄISCHE PATENTANMELDUNG

(11) **EP 1 341 283 A1**
(43) Veröffentlichungstag der Anmeldung: **03.09.2003**
(21) Anmeldenummer: 02405149.2
(22) Anmeldetag: 01.03.2002
(51) Int. Cl.: H02B 1/24

(54) **Schaltanlage zur Verteilung elektrischer Energie**

(71) Anmelder: ABB RESEARCH LTD., 8050 Zürich (CH)
(72) Erfinder: Heitz, Christoph, 8353 Elgg (CH)
(74) Vertreter: ABB Patent Attorneys

(57) **Zusammenfassung**

Ein Anlagenblock (2) der Schaltanlage (1) umfasst mehrere Abgänge (3, 4, 5), ein Abschaltelement (8) sowie eine Anzahl von Kommutierungsschaltelementen (9, 10, 11, 12). Das Abschaltelement (8) ist für die Stromunterbrechung, nicht aber für das Führen des Nennstromes ausgebildet. Demgegenüber übernehmen die Kommutierungsschaltelemente (9, 10, 11, 12) die Nennstromführung und sind für das kurzzeitige Führen eines Fehlerstromes, jedoch nicht für das Abschalten dieses Fehlerstromes ausgelegt. Sie bewirken beim Oeffnen ein Kommutieren des Stromes auf einen andern Strompfad, der das Abschaltelement (8) aufweist. Einer der Abgänge (3) ist direkt an die eine Anschlussseite (7a) des Abschaltelementes (8) angeschlossen. Die übrigen Abgänge (4, 5) sind über jeweils ein Kommutierungsschaltelement (9, 10, 11, 12) sowohl mit der genannten einen Anschlussseite (7a) wie auch mit der andern Anschlussseite (7b) des Abschaltelementes (8) verbunden.

Die Schaltanlage (1) kommt pro Anlagenblock (2) mit einem einzigen Abschaltelement (8), das mehreren Abgängen (3, 4, 5) zugeordnet ist, aus und benötigt keinen Leistungsschalter.

## Beschreibung

### Technisches Gebiet

Die Erfindung betrifft eine Schaltanlage zur Verteilung elektrischer Energie gemäss Oberbegriff des Anspruches 1 sowie ein Verfahren zum Betreiben dieser Schaltanlage.

### Stand der Technik

In der DE-A-198 33 607 ist eine Schaltanlage dieser Art beschrieben, die zwei Sammelschienen aufweist, die über einen normalerweise geschlossenen, als Abschaltelement dienenden Leistungsschalter zueinander parallel geschaltet sind. Die Schaltanlage umfasst weiter eine Anzahl von zu einem Energietransferblock gehörenden Abgängen, die wahlweise über jeweils einen, drei Schalterpositionen aufweisenden Schnellumschalter mit den Sammelschienen verbunden werden können. Zum Abschalten eines dieser Abgänge wird der abzuschaltende Abgang mittels des zugeordneten Schnellumschalters an die eine Sammelschiene angeschlossen und damit mit der einen Anschlussseite des Leistungsschalters verbunden, während die übrigen Abgänge mittels der ihnen zugeordneten Schnellumschalter an die andere Sammelschiene angeschlossen und damit mit der andern Anschlussseite des Leistungsschalters verbunden werden. Anschliessend wird der Leistungsschalter geöffnet und der abzuschaltende Abgang durch Öffnen des zugeordneten Schnellumschalters von der Sammelschiene getrennt.

Diese bekannte Schaltanlage hat den Vorteil, dass bei einer Vielzahl von Abgängen nur ein Leistungsschalter erforderlich ist, der jedoch sowohl für die Stromunterbrechung wie für die Nennstromführung ausgebildet sein muss. Zudem wird für jeden Abgang ein Schnellumschalter mit drei Schalterpositionen benötigt.

In der DE-A-36 42 108 ist eine Schaltanlage offenbart, die eine Hauptsammelschiene und mindestens eine Hilfssammelschiene sowie zwei oder mehr Abgänge aufweist. Die Hilfssammelschiene ist über einen im Normalbetrieb geschlossenen, als Abschaltelement dienenden Leistungsschalter mit der Hauptsammelschiene verbunden. Jeder der Abgänge kann jeweils über zwei zugeordnete Trennschalter mit der Haupt- und/oder der Hilfssammelschiene verbunden werden. Im Normalbetrieb ist jeder der Abgänge über einen ersten der zugeordneten Trennschalter mit der Hauptsammelschiene verbunden und von der Hilfssammelschiene getrennt.

Soll einer der Abgänge abgetrennt werden, so wird der entsprechende Abgang über den zweiten der zugeordneten Trennschalter mit der Hilfssammelschiene verbunden. Anschliessend wird dieser Abgang mittels des ersten Trennschalters von der Hauptsammelschiene getrennt. Danach wird der Leistungsschalter geöffnet, so dass der betreffende Abgang nur noch mit der Hilfssammelschiene verbunden ist. Durch Öffnen des zugeordneten zweiten Trennschalters wird schliesslich der besagte Abgang auch noch von der Hilfssammelschiene getrennt. Jetzt kann der Leistungsschalter wieder geschlossen werden.

Auch bei dieser Schaltanlage ist bei einer Vielzahl von Abgängen nur ein Leistungsschalter erforderlich. Dieser muss jedoch ebenfalls sowohl für die Stromunterbrechung wie für die Nennstromführung ausgebildet sein. Für jeden Abgang werden mindestens zwei Trennschalter benötigt. Bei nur einem Leistungsschalter in der Schaltanlage muss in einem Fehlerfall der Strom unter Umständen über eine grosse räumliche Distanz kommutiert werden, was besondere Anforderungen an die Konstruktion der Trennschalter stellt.

### Darstellung der Erfindung

Der vorliegenden Erfindung liegt nun die Aufgabe zu Grunde, eine Schaltanlage der eingangs genannten Art zu schaffen, die für das selektive Abschalten der Abgänge mit einer möglichst kleinen Zahl von kostengünstigen Komponenten auskommt.

Diese Aufgabe wird mit einer Schaltanlage mit den Merkmalen des Anspruches 1 gelöst.

Im Normalbetrieb der erfindungsgemässen Schaltanlage fliesst der Strom über die Kommutierungsschaltelemente. Somit ist das Abschaltelement von der Nennstromführung entlastet, was es ermöglicht, als Abschaltelement ein im Vergleich zu einem Leistungsschalter kostengünstigeres Gerät einzusetzen. Der direkt und dauernd an die eine Seite des Abschaltelementes angeschlossene Abgang benötigt kein Kommutierungsschaltelement, was sich weiter vorteilhaft auf die Anlagekosten auswirkt. Da das Abschaltelement in der Nähe der Kommutierungsschaltelemente angeordnet werden kann, ist die Kommutierung des Stromes in einem Schaltfall einfacher.

Betrieben wird die erfindungsgemässe Schaltanlage nach dem im Anspruch 9 definierten Verfahren.

Bevorzugte Weiterausgestaltungen des Erfindungsgegenstandes sind in den abhängigen Ansprüchen umschrieben.

### Kurze Beschreibung der Zeichnungen

Im folgenden wird die Erfindung anhand von Figuren, welche lediglich Ausführungsbeispiele darstellen, näher erläutert.

Es zeigen:
- Fig. 1: eine Schaltanlage mit einem drei Abgänge aufweisenden Anlagenblock, und
- Fig. 2: eine Schaltanlage mit zwei oder mehr Anlagenblöcken gemäss Fig. 1, die an eine gemeinsame Sammelschiene angeschlossen sind.

### Wege zur Ausführung der Erfindung

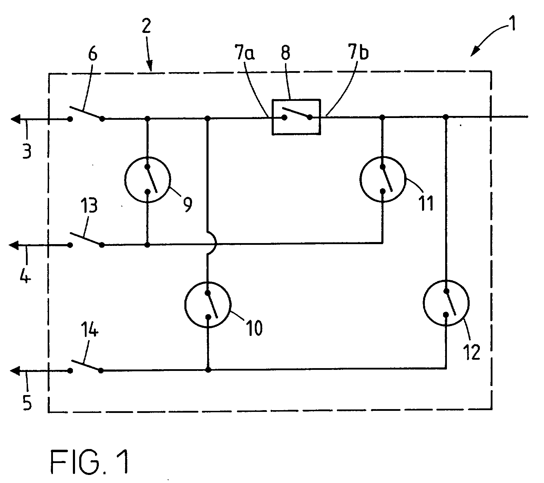

In der Fig. 1 ist eine Schaltanlage 1 mit einem Anlagenblock 2 und drei Abgängen 3, 4 und 5 gezeigt. Der Anlagenblock 2 kann auch mehr als drei Abgänge oder nur zwei Abgänge 3, 4 aufweisen. Einer der Abgänge, nämlich der Abgang 3, ist über einen Abgangstrenner 6 direkt mit der einen, ersten Anschlussseite 7a eines Abschaltelementes 8 verbunden. Jeder der übrigen Abgänge 4, 5 ist einerseits über jeweils ein erstes Kommutierungsschaltelement 9 bzw. 10 mit dieser ersten Anschlussseite 7a des Abschaltelementes 8 und andererseits über jeweils ein zweites Kommutierungsschaltelement 11 bzw. 12 mit der anderen, zweiten Anschlussseite 7b des Abschaltelementes 8 verbunden. Die weiteren Abgänge 4 und 5 sind ebenfalls mit einem Abgangstrenner 13 bzw. 14 ausgerüstet.

Das Abschaltelement 8 ist für eine Stromunterbrechung, nicht aber für das Führen des Nennstromes ausgelegt. Die Führung des Nennstromes erfolgt über die Kommutierungsschaltelemente 9, 10, 11 und 12, die zwar zum kurzzeitigen Führen eines Fehlerstromes, nicht jedoch zur Unterbrechung dieses Fehlerstromes ausgelegt und so konstruiert sind, dass beim Oeffnen ein Kommutieren des Stromes auf einen ändern Strompfad, in den das Abschaltelement 8 geschaltet ist, bewirkt wird. Bei den Kommutierungsschaltelelementen 9, 10, 11 und 12, die ähnlich aufgebaut sind wie das Nennstromkontaktsystem eines herkömmlichen Leistungsschalters, ist konstruktiv dafür gesorgt, dass beim Öffnen eine genügend grosse Spannung (z. B. Lichtbogenspannung) aufgebaut wird, damit der Strom innerhalb der nötigen Schaltzeit auf den besagten andern Strompfad kommutiert wird. Ein Beispiel einer geeigneten konstruktiven Ausbildung des Kontaktsystems eines derartigen Kommutationsschaltelementes ist in der US-A-4,371,765 gezeigt.

Das Abschaltelement 8 kann mit einem Schaltkontaktsystem ausgerüstet sein, das dem Leistungsschaltkontaktsystem eines herkömmlichen Leistungsschalters entspricht. Als Abschaltelement 8 kann aber auch ein Schnellschalter, eine Strombegrenzungseinrichtung, eine Halbleiterschaltvorrichtung, ein Supraleiter mit in Serie geschaltetem Lasttrenner, eine Sicherung oder ein wiedereinschaltbares Sicherungselement eingesetzt werden.

Die Funktionsweise der in der Fig. 1 gezeigten Schaltanlage 1 ist wie folgt:

Im Normalbetrieb sind das Abschaltelement 8 und alle Kommutierungsschaltelemente 9, 10, 11 und 12 sowie die Abgangstrenner 6, 13 und 14 geschlossen. Der Stromfluss erfolgt über die Kommutierungsschaltelemente 9, 10, 11 und 12.

Ist eine Schalthandlung erforderlich, sei es gewollt oder in einem Fehlerfall, so wird jeweils der zu schaltende Abgang auf die eine Anschlussseite 7a oder 7b des Abschaltelementes 8 und alle anderen Abgänge auf die andere Anschlussseite 7b bzw.7a geschaltet.

Für das Abschalten des Abganges 3 werden zuerst die Kommutierungsschaltelemente 9 und 10 geöffnet. Der Abgang 3 bleibt an die Anschlussseite 7a des Abschaltelementes 8 angeschlossen, während die Abgänge 4 und 5 nur mit der anderen Anschlussseite 7b des Abschaltelementes 8 verbunden sind. Der Strom fliesst jetzt über das Abschaltelement 8, das nun geöffnet wird. Anschliessend wird der Abgangstrenner 6 geöffnet. Jetzt können die Kommutierungsschaltelemente 9 und 10 sowie das Abschaltelement 8 wieder geschlossen werden.

Soll der Abgang 4 abgeschaltet werden, so werden zuerst die Kommutierungsschaltelemente 9 und 12 geöffnet. Der Abgang 4 ist jetzt nur mit der Anschlussseite 7b des Abschaltelementes 8 verbunden, während der Abgang 5 zusammen mit dem Abgang 3 nur an die andere Anschlussseite 7a des Abschaltelementes 8 angeschlossen ist. Nun wird zuerst das Abschaltelement 8 und anschliessend der Abgangstrenner 13 geöffnet. Jetzt werden die Kommutierungsschaltelemente 9 und 12 sowie das Abschaltelement 8 wieder geschlossen.

Das Abschalten des Abganges 5 erfolgt auf entsprechende Weise, d. h. zuerst wird dieser Abgang 5 durch Oeffnen der Kommutierungsschaltelemente 10 und 11 nur an die Anschlussseite 7b des Abschaltelementes 8 angelegt, während der Abgang 4 zusammen mit dem Abgang 3 mit der andern Anschlussseite 7a des Abschaltelementes 8 verbunden bleibt. Nach dem Oeffnen des Abschaltelementes 8 und des Abgangstrenners 14 erfolgt das Schliessen der Kommutierungsschaltelemente 10 und 11 sowie des Abschaltelementes 8.

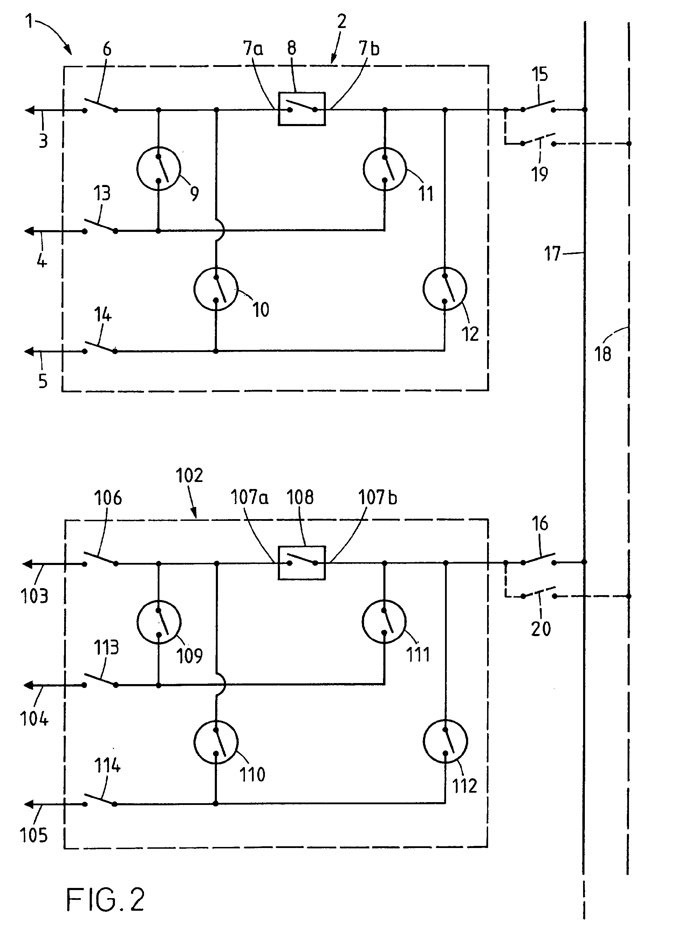

In der Fig. 2 ist eine Schaltanlage 1 gezeigt, die zwei Anlagenblöcke 2, 102 der anhand der Fig. 1 beschriebenen Art aufweist. Bei der gezeigten Ausführungsform sind die beiden Anlagenblöcke 2, 102 von identischem Aufbau, wobei für die einzelnen Elemente des Anlagenblockes 102 Bezugszeichen verwendet werden, die um die Zahl 100 grösser sind als die Bezugszeichen, die die entsprechenden Elemente des Anlagenblockes 2 bezeichnen. So entspricht der Abgang 103 dem Abgang 3, das Abschaltelement 108 dem Abschaltelement 8 usw.

Jeder Anlagenblock 2,102 ist über einen Trenner 15 bzw. 16, der an die zweite Anschlussseite 7b, 107b des Abschaltelementes 8, 108 angeschlossen ist, mit einer gemeinsamen Sammelschiene 17 verbunden.

Es versteht sich, dass die Schaltanlage gemäss Fig. 2 auch mehr als zwei Anlagenblöcke 2, 102 umfassen kann und die einzelnen Anlagenblöcke 2, 102 eine unterschiedliche Anzahl von Abgängen 3, 4, 5 bzw. 103, 104, 105 aufweisen können.

Die Betriebsweise der in der Fig. 2 dargestellten Schaltanlage 1 ist wie folgt:

Der Normalbetrieb läuft für jeden Anlagenblock 2, 102 gleich wie anhand der Fig. 1 beschrieben ab. Falls erforderlich können die einzelnen Anlagenblöcke 2, 102 durch Öffnen der Trenner 15, 16 von der Sammelschiene 17 abgetrennt werden.

Schalthandlungen werden grundsätzlich nach den anhand der Fig. 1 erläuterten Prinzipien durchgeführt, wobei zusätzlich noch dem Umstand Rechnung getragen werden muss, dass mehrere Anlagenblöcke 2, 102 zusammengeschaltet sind.

Das Abschalten des Abganges 3 des Anlagenblockes 2 erfolgt gleich wie anhand der Fig. 1 beschrieben. Im zweiten Anlagenblock 102 und in allfälligen weiteren Anlagenblöcken sind keine Schalthandlungen erforderlich. Entsprechend erfolgt das Abschalten des Abganges 103.

Muss der Abgang 4 des Anlagenblockes 2 abgeschaltet werden, so werden die Kommutierungsschaltelemente 9 und 12 dieses Anlagenblockes 2 wie anhand der Fig. 1 beschrieben geöffnet, um den Abgang 4 mit der Anschlussseite 7b und den Abgang 5 mit der Anschlusseite 7a des Abschaltelementes 8 zu verbinden. Der abzuschaltende Abgang 4 ist damit mit der Sammelschiene 17 verbunden. Im zweiten Anlagenblock 102 (und -falls vorhanden- in den weiteren Anlagenblöcken) werden die Kommutierungsschaltelemente 111 und 112 geöffnet, was zur Folge hat, dass die Sammelschiene 17 mit der Anschlusseite 107b des Abschaltelementes 108 und alle Abgänge 103, 104 und 105 des zweiten Anlagenblockes 102 mit der andern Anschlussseite 107a des Abschaltelementes 108 verbunden sind. Nun werden die Abschaltelemente 8, 108 in beiden Anlagenblöcken 2, 102 geöffnet. Damit wird der Stromfluss unterbrochen. Nach dem Oeffnen des Abgangstrenners 13 des Abganges 4 werden alle vorgängig geöffneten Kommutierungsschaltelemente 9, 12, 111, 112 sowie beide Abschaltelemente 8, 108 wieder geschlossen.

Solange während des vorgängig beschriebenen Schaltvorganges die beiden Abschaltelemente 8, 108 geöffnet sind, ist die elektrische Verbindung zwischen den Anlagenblöcken 2, 102 unterbrochen. Ein Leistungsfluss zwischen den Abgängen 3, 5 und den Abgängen 103, 104, 105 ist nicht mehr möglich. Doch bleiben die Abgänge 3 und 5 einerseits sowie die Abgänge 103, 104, 105 andererseits zu jeder Zeit miteinander verbunden, so dass zwischen den entsprechenden Abgängen Leistungsflüsse möglich sind.

Das Abschalten des Abganges 5 sowie der Abgänge 104 und 105 erfolgt nach demselben Konzept.

Bei einem Fehler in der Sammelschiene 17 werden in jedem Anlagenblock 2, 102 die an die zweite Anschlussseite 7b, 107b der Abschaltelemente 8, 108 angeschlossenen Kommutierungsschaltelemente 11, 12 und 111, 112 geöffnet. Damit sind alle Abgänge 3, 4, 5 und 103, 104, 105 nur noch über die Abschaltelemente 8, 108 mit der Sammelschiene 17 verbunden. Durch Oeffnen dieser Abschaltelemente 8, 108 wird der Stromfluss zwischen den Abgängen 3, 4, 5 und 103, 104, 105 und der Sammelschiene 17 unterbrochen. Die Schaltanlage 1 zerfällt in die einzelnen Anlagenblöcke 2 und 102. Nach dem Öffnen der Trenner 15 und 16 können die Kommutierungsschaltelemente 11, 12 und 111, 112 sowie die Abschaltelemente 8, 108 wieder geschlossen werden. Die einzelnen Anlagenblöcke 2, 102 sind jeweils für sich wieder funktionsfähig. Dabei ist es von Vorteil, die Abgänge 3, 4, 5 bzw. 103, 104, 105 in den einzelnen Anlagenblöcken 2, 102 so zu gruppieren, dass jeder Anlagenblock 2, 102 einen eigenen leistungseinspeisenden Abgang hat. Dieser leistungseinspeisende Abgang ist vorzugsweise derjenige Abgang, der fest mit der ersten Anschlussseite 7a, 107a des Abschaltelementes 8, 108 verbunden ist, also der Abgang 3 bzw. 103. Der leistungseinspeisende Abgang übernimmt im Falle eines Fehlers in einem der übrigen Abgänge eines Anlagenblockes die Stromversorgung während der zum Abschalten des fehlerbehafteten Abganges erforderlichen Schalthandlungen.

Wie in der Fig. 2 gestrichelt dargestellt kann eine zweite Sammelschiene 18 vorgesehen werden, an die über Trenner 19 bzw. 20 die Anlagenblöcke 2 bzw. 102 angeschlossen werden können. Diese zweite Sammelschiene 18 ermöglicht im Falle eines Fehlers in der ersten Sammelschiene 17 eine Umwegschaltung, die nach Abschluss aller zum Weggschalten der Anlagenblöcke 2, 102 von der fehlerbehafteten Sammelschiene 17 notwendigen Schalthandlungen wieder einen Vollbetrieb der gesamten Schaltanlage 1 ermöglicht.

Es ist möglich, das Abschaltelement 8, 108 und die Kommutierungsschaltelemente 9, 10, 11, 12; 109, 110, 111, 112 jedes Anlagenblockes 2, 102 zu einer ein Schaltmodul bildenden Baueinheit zusammenzufassen und in einem gemeinsamen Gehäuse unterzubringen. Dabei ist es von Vorteil, wenn für die Durchführung von Schalthandlungen das Abschaltelement 8, 108 und die Kommutierungsschaltelemente 9, 10, 11, 12; 109, 110, 111, 112 eines Anlagenblockes 2, 102 mechanisch oder hydraulisch miteinander gekoppelt werden.

Die vorstehend beschriebene erfindungsgemässe Schaltanlage 1 benötigt pro Anlagenblock 2, 102 nur ein Abschaltelement 8, 108, das mehreren Abgängen 3, 4, 5; 103, 104, 105 zugeordnet ist, und kommt ohne teure Leistungsschalter aus, was sich günstig auf die Anlagekosten auswirkt.

### Bezugszeichenliste

- 1: Schaltanlage
- 2: Anlagenblock
- 3,4,5: Abgang
- 6: Abgangstrenner
- 7a,7b: Anschlussseite
- 8: Abschaltelement
- 9,10,11,12: Kommutierungsschaltelement
- 13,14: Abgangstrenner
- 15,16: Trenner
- 17,18: Sammelschiene
- 19,20: Trenner
- 102: zweiter Anlagenblock
- 103,104,105: Abgang
- 106: Abgangstrenner
- 107a,107b: Anschlussseite
- 108: Abschaltelement
- 109,110,111,112: Kommutierungsschaltelement
- 113,114: Abgangstrenner

## Patentansprüche

1. Schaltanlage (1) zur Verteilung elektrischer Energie mit wenigstens einem Anlagenblock (2), der ein Abschaltelement (8) und mindestens zwei Abgänge (3, 4, 5) umfasst, die im Normalbetrieb an jeweils eine der Anschlussseiten (7a, 7b) des Abschaltelementes (8) angeschlossen sind, **dadurch gekennzeichnet, dass** ein erster Abgang (3) direkt mit der einen, ersten Anschlussseite (7a) des Abschaltelementes (8) verbunden ist, während jeder weitere Abgang (4, 5) im Normalbetrieb über jeweils ein Kommutierungsschaltelement (9, 11, 10, 12), das für die Führung des Nennstromes und kurzzeitig eines Fehlerstromes, jedoch nicht für ein Abschalten von Fehlerströmen ausgelegt ist und beim Oeffnen ein Kommutieren des Stromes auf einen ändern, das Abschaltelement (8) aufweisenden Strompfad bewirkt, sowohl mit der genannten ersten Anschlussseite (7a) des Abschaltelementes (8) wie auch mit dessen andern, zweiten Anschlussseite (7b) verbunden ist, und dass das Abschaltelement (8) für eine Stromunterbrechung, jedoch nicht für die Führung des Nennstromes ausgelegt ist.

2. Schaltanlage nach Anspruch 1, **dadurch gekennzeichnet, dass** in jedem Abgang (3, 4, 5) ein Abgangstrenner (6, 13, 14) vorgesehen ist.

3. Schaltanlage nach Anspruch 1 oder 2, **gekennzeichnet durch** mindestens einen weiteren Anlagenblock (102) mit einem Abschaltelement (108) und zwei oder mehr Abgängen (103, 104, 105), der im Aufbau dem ersten Anlagenblock (2) entspricht, und **durch** eine Sammelschiene (17), an die die Anlagenblöcke (2, 102) über Trenner (15, 16), die mit der jeweils zweiten Anschlussseite (7b, 107b) der Abschaltelemente (8, 108) verbunden sind, anschliessbar sind.

4. Schaltanlage nach Anspruch 3, **gekennzeichnet durch** eine weitere Sammelschiene (18), an die die Anlagenblöcke (2, 102) über weitere Trenner (19, 20), die mit der jeweils zweiten Anschlussseite (7b, 107b) der Abschaltelemente (8, 108) verbunden sind, anschliessbar sind.

5. Schaltanlage nach einem der Ansprüche 1 - 4, **dadurch gekennzeichnet, dass** jeder Anlagenblock (2, 102) wenigstens einen leistungseinspeisenden Abgang (3, 4, 5; 103, 104, 105) aufweist.

6. Schaltanlage nach Anspruch 5, **dadurch gekennzeichnet, dass** der leistungseinspeisende Abgang der direkt mit der ersten Anschlussseite (7a, 107a) des Abschaltelementes (8, 108) verbundene erste Abgang (3, 103) ist.

7. Schaltanlage nach einem der Ansprüche 1 - 6, **dadurch gekennzeichnet, dass** das Abschaltelement (8, 108) und die Kommutierungsschaltelemente (9, 10, 11, 12; 109, 110, 111, 112) jedes Anlagenblockes (2, 102) zu einer Baueinheit zusammengefasst und in einem gemeinsamen Gehäuse untergebracht sind.

8. Schaltanlage nach einem der Ansprüche 1 - 7, **dadurch gekennzeichnet, dass** zur Durchführung von Schalthandlungen das Abschaltelement (8, 108) und die Kommutierungsschaltelemente (9, 10, 11, 12; 109, 110, 111, 112) eines Anlagenblockes (2, 102) mechanisch oder hydraulisch miteinander koppelbar sind.

9. Verfahren zum Betrieb der Schaltanlage nach Anspruch 1, **dadurch gekennzeichnet, dass** zum Abschalten eines Abganges (3, 4, 5) jeweils der abzuschaltende Abgang durch Oeffnen der entsprechenden Kommutierungsschaltelemente (9, 10, 11, 12) mit der einen Anschlusssseite (7a,7b) des Abschaltelementes (8) und alle andern Abgänge mit der andern Anschlussseite (7b, 7a) des Abschaltelementes (8) verbunden werden, anschliessend das Abschaltelement (8) geöffnet wird, danach der abgeschaltete Abgang abgetrennt wird und dann das Abschaltelement (8) und die offenen Kommutierungsschaltelemente (9, 10, 11, 12) wieder geschlossen werden.

10. Verfahren nach Anspruch 9, **dadurch gekennzeichnet, dass** das Abtrennen des abgeschalteten Abganges durch Oeffnen eines ihm zugeordneten Abgangstrenners (6, 13, 14) erfolgt.

11. Verfahren nach Anspruch 9 oder 10, **dadurch gekennzeichnet, dass** für das Abschalten des ersten, fest mit der ersten Anschlussseite (7a) des Abschaltelementes (8) verbundenen Abganges (3) zuerst die übrigen Abgänge (4, 5) durch Öffnen der entsprechenden Kommutierungsschaltelemente (9, 10, 11, 12) mit der zweiten Anschlussseite (7b) des Abschaltelementes (8) verbunden werden, während für das Abschalten eines der weiteren Abgänge (4, 5) zuerst der abzuschaltende weitere Abgang (4 oder 5) durch Öffnen der entsprechenden Kommutierungsschaltelemente (9, 10, 11, 12) an die zweite Anschlussseite (7b) des Abschaltelementes (8) angeschlossen wird.

12. Verfahren nach Anspruch 11 zum Betrieb der Schaltanlage nach Anspruch 3, **dadurch gekennzeichnet, dass** für das Abschalten eines der weiteren Abgänge (4, 5; 104, 105) eines Anlagenblockes (2, 102) in diesem Anlagenblock (2, 102) zuerst der abzuschaltende weitere Abgang (4 oder 5; 104 oder 105) durch Öffnen der entsprechenden Kommutierungsschaltelemente (9, 10, 11, 12; 109, 110, 111, 112) an die zweite Anschlussseite (7b, 107b) des Abschaltelementes (8, 108) angeschlossen und in den übrigen Anlagenblöcken (2, 102) die Verbindung der weiteren Abgänge ( 4, 5; 104, 105) mit der zweiten Anschlussseite (7b, 107b) des Abschaltelementes (8, 108) durch Oeffnen der entsprechenden Kommutierungsschaltelemente (11, 12; 111, 112) getrennt wird und dann die Abschaltelemente (8, 108) aller Anlagenblöcke (2, 102) geöffnet werden.

13. Verfahren nach Anspruch 11 zum Betrieb der Schaltanlage nach Anspruch 3, **dadurch gekennzeichnet, dass** für das Wegschalten der Anlagenblöcke (2, 102) von der Sammelschiene (17) die an die zweiten Anschlussseiten (7b, 107b) der Abschaltelemente (8, 108) angeschlossenen Kommutierungsschaltelemente (11, 12; 111, 112) und dann die Trenner (15, 16) geöffnet werden, worauf die vorgängig geöffneten Kommutierungsschaltelemente (11, 12; 111, 112) wieder geschlossen werden.
